# FASCICULE DE BREVET EUROPEEN

(11) **EP 2 885 565 B1**
(45) Date de publication et mention de la délivrance du brevet: **20.11.2019**
(21) Numéro de dépôt: 13748045.5
(22) Date de dépôt: 13.08.2013
(51) Int. Cl.: F16L 5/02

(54) **RACCORD DE JONCTION ENTRE UNE CONDUITE POUR FLUIDE ET UN SUPPORT ANNULAIRE**
GELENKVERBINDUNG ZWISCHEN EINEM FLÜSSIGKEITSROHR UND EINEM RINGTRÄGER
JOINT FITTING BETWEEN A FLUID PIPE AND AN ANNULAR SUPPORT

(30) Priorité: 17.08.2012 FR 1257851
(43) Date de publication de la demande: 24.06.2015
(73) Titulaire: Zodiac Aero Duct Systems, 60200 Compiègne (FR)
(72) Inventeur: LAUBIE, Charles, B-1160 Bruxelles (BE)
(74) Mandataire: Casalonga
(86) Numéro de dépôt international: PCT/EP2013/066851
(87) Numéro de publication internationale: WO 2014/026955

(56) Documents cités:
- EP-A2- 2 423 550
- WO-A1-2005/059421
- WO-A1-2011/158750
- FR-A1- 2 823 284
- FR-A5- 2 091 223

## Description

L'invention a pour domaine technique les raccords articulés.

Dans un aéronef, un ensemble de conduites permet d'acheminer liquides et gaz à travers différentes zones techniques. Ces zones sont généralement cloisonnées afin de renforcer structurellement l'appareil tout en fournissant des volumes plus ou moins pressurisés. Dans de tels cas, il est difficile de concilier l'étanchéité des zones techniques tout en assurant le support des conduites.

Pour obtenir ce résultat, il est généralement fait appel à deux pièces distinctes, un passe cloison et un support rigide.

Le passe cloison permet d'assurer l'étanchéité aux gaz et aux liquides dans un orifice ménagé dans une cloison de compartiment afin de laisser passer une conduite.

Le support rigide permet de maintenir la conduite et de la solidariser au châssis.

Il apparaît ainsi que le coût et le poids de ces deux systèmes est élevé.

Le document FR2091223 divulgue une traversée étanche d'un élément dans une cloison. L'étanchéité est assurée par une pièce intermédiaire élastique qui est un joint comportant une partie sphérique creuse de part et d'autre de laquelle ses extrémités enserrent l'élément hermétiquement.

Il existe donc un besoin pour un système permettant qu'une conduite traverse une cloison de façon étanche, le système étant également apte à maintenir la conduite en place.

L'invention a pour objet un raccord de jonction entre une conduite pour fluide et un support annulaire, comprenant une plaque bombée formant rotule fixée autour de la conduite, la rotule étant par ailleurs en contact avec un fourreau annulaire, contenu dans un boîtier du support annulaire.

La rotule comprend une plaque intérieure et une plaque extérieure, la plaque intérieure étant soudée par une de ses extrémités sur la conduite, l'autre extrémité étant en appui simple sur la conduite avec ou sans jeu périphérique, la plaque extérieure recouvrant partiellement la plaque intérieure.

La plaque intérieure peut présenter une épaisseur plus importante que celle de la plaque extérieure.

La plaque extérieure peut être constituée d'un matériau de plus grande dureté de surface et de plus grande limite élastique par rapport aux propriétés correspondantes de la plaque intérieure.

Le fourreau peut comprendre un palier annulaire en contact par son alésage interne avec la surface extérieure de la rotule et une bague montée autour du palier.

Le palier peut être revêtu d'un revêtement améliorant les propriétés de résistance à l'usure et de coefficient de frottement.

Le revêtement peut comprendre des nanomatériaux ou du graphite.

Les deux flans radiaux du palier peuvent être en contact de frottement avec deux jupes latérales du boîtier.

Le boîtier peut comprendre deux parties, l'une des jupes latérales étant fixée sur une partie du boîtier, l'autre jupe étant fixée sur l'autre partie.

La dimension axiale de la bague peut être inférieure à celle du palier.

Au moins un ressort à lame peut être monté entre la paroi périphérique interne du boîtier et la bague.

La bague peut présenter une nervure périphérique assurant à la fois la raideur de la bague et son centrage.

Deux ressorts peuvent être montés de part et d'autre de la nervure périphérique.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre une vue en coupe du raccord de jonction,
- la figure 2 illustre une vue en perspective du raccord de jonction, et
- la figure 3 illustre une vue en coupe du raccord de jonction après utilisation.

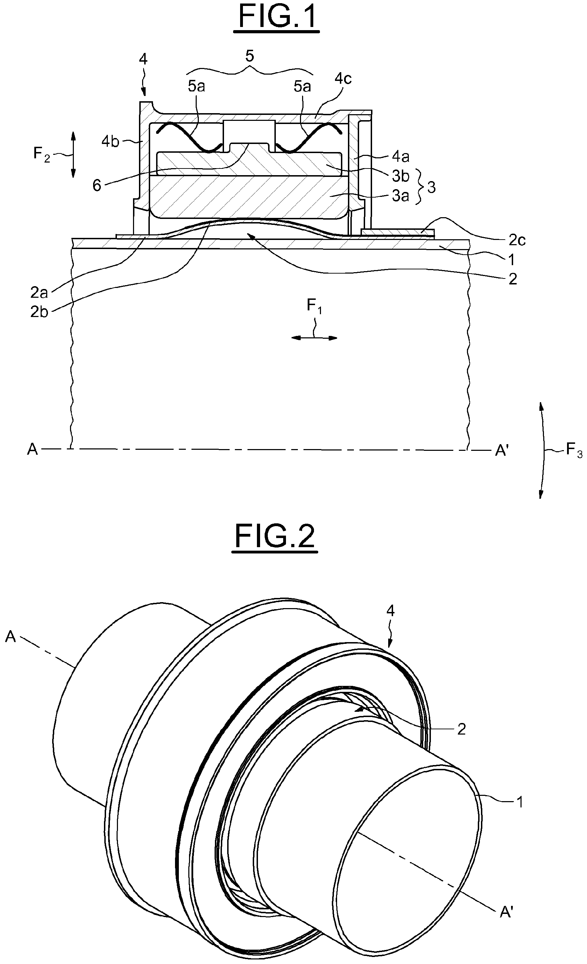

La figure 1 montre une vue en coupe d'un raccord de jonction. On peut voir une conduite 1 sur laquelle est fixée une plaque bombée formant rotule 2 en contact avec la surface intérieure d'un fourreau annulaire 3, lui-même contenu dans un boîtier. La conduite 1 peut être apte à contenir des fluides gazeux ou liquides. La plaque bombée formant rotule 2 est sphérique ou torique, et est disposée et ajustée autour de la conduite 1. La plaque bombée formant rotule 2 comprend deux parties, une plaque intérieure 2a et une plaque extérieure 2b.

La plaque intérieure 2a est fixée par une de ses extrémités sur la conduite 1 par une soudure 2c, tandis que son autre extrémité est en appui simple sur cette même conduite 1. Cette autre extrémité peut présenter ou non un jeu périphérique avec la conduite. Un tel mode de fixation confère une élasticité accrue à la plaque bombée formant rotule 2. La plaque bombée formant rotule 2 s'étendant tout autour de la périphérie de la conduite 1, on comprendra que la soudure 2c s'étend de même selon la périphérie de la conduite 1. La soudure 2c peut être continue ou discontinue.

La plaque extérieure 2b présente une extension inférieure à celle de la plaque intérieure 2a de sorte que le recouvrement se limite à la partie soudée à la conduite 1 et à la partie convexe de la plaque bombée formant rotule 2. En d'autres termes, la plaque extérieure 2b ne recouvre pas la plaque intérieure 2a au niveau du contact simple avec la conduite 1.

La plaque intérieure 2a présente de préférence une épaisseur plus importante que celle de la plaque extérieure 2b afin que la plaque extérieure 2b, de par sa plus grande flexibilité, puisse assurer une fonction d'étanchéité en restant toujours en contact avec l'alésage du fourreau 3.

La plaque extérieure 2b est, à cet effet, préférentiellement constituée d'un matériau de plus grande dureté de surface et de limite élastique supérieure par rapport aux propriétés correspondantes de la plaque intérieure 2a. En augmentant la dureté de la plaque extérieure 2b plutôt que celle de la plaque intérieure 2a, on facilite le procédé de fabrication et de montage. De plus, la plaque extérieure 2b permet alors d'assurer un bon frottement glissant de la plaque bombée formant rotule 2 sur un palier annulaire 3a formant une partie intérieure du fourreau annulaire 3, de limiter l'usure de la plaque bombée formant rotule 2 et de compenser l'usure du palier annulaire 3a.

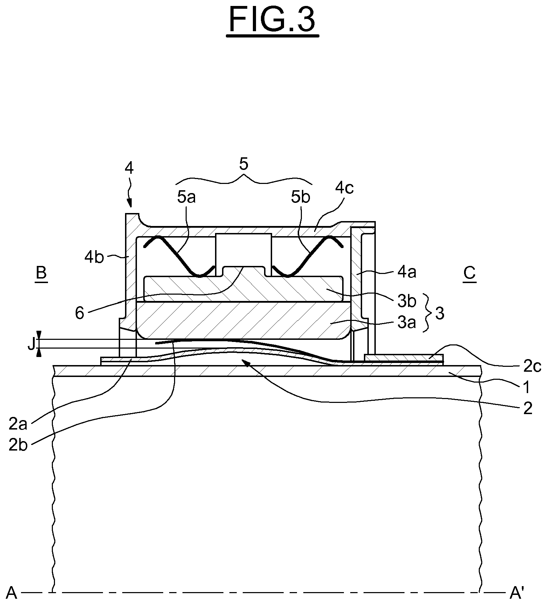

La figure 3 montre un raccord de jonction usé, dans lequel le palier 3a présente une certaine usure. Un jeu d'usure, noté J, apparaît alors entre le palier 3a et la plaque intérieure 2a de la rotule 2. Toutefois, un contact est maintenu entre le palier 3a et la rotule 2 grâce à la présence de la plaque extérieure 2b qui présente une élasticité supérieure à celle de la plaque inférieure 2a. La plaque extérieure 2b maintient un contact avec l'alésage du palier 3a à la manière d'un joint à lèvre. Un tel comportement de la plaque extérieure 2b permet ainsi d'assurer l'étanchéité entre les deux cotés B et C du raccord de jonction même lorsque le raccord est usé.

En se référant à nouveau à la figure 2, on peut voir que le fourreau annulaire 3 comprend le palier 3a précédemment décrit et une bague 3b.

Le palier 3a est ajusté en contact avec la plaque bombée formant rotule 2 par ajustement glissant. Le palier 3a est maintenu par la bague 3b. En effet, la plaque bombée formant rotule 2 présentant un comportement élastique, le palier 3a est soumis à une force tendant à l'écarter de la rotule 2. La bague 3b permet de maintenir le palier 3a en contact avec la rotule 2. L'ensemble du palier 3a et de la bague 3b est contenu dans le boîtier 4. Le débattement de la bague 3b est limité par le volume accessible à l'intérieur du boîtier 4. Il est également possible d'employer des ressorts à lames afin de créer une force résistante supplémentaire s'opposant au déplacement du palier 3a vers l'extérieur. Une telle réalisation est décrite plus loin.

Le palier 3a peut être revêtu d'un revêtement à base de nanomatériaux ou de graphite afin d'en améliorer les propriétés de résistance à l'usure et de frottement. Le revêtement peut être déposé sur les flancs et sur la surface de contact avec la rotule 2. Le revêtement peut également être déposé sur toutes les surfaces du palier 3a.

La liaison entre le palier 3a et la bague 3b est laissée libre. Les matériaux constitutifs du palier 3a et de la bague 3b dépendent de la température de fonctionnement, des conditions vibratoires et du mode d'assemblage entre le palier 3a et le bague 3b.

Le fourreau annulaire 3 est mis en position dans un boîtier 4 avec un guidage radial entre les deux flans du palier 3a et des jupes complémentaires 4a, 4b présentes sur le boîtier 4. Le palier 3a est avantageusement plus large que la bague 3b de façon que la bague 3b n'entre pas en contact avec les jupes 4a, 4b.

Le boîtier 4 présente une forme d'anneau et est formé en deux parties, maintenues solidaires par une liaison, démontable (vis) ou non démontable (rivets, soudure). Dans l'exemple illustré, la première partie comprend une jupe latérale 4a et la deuxième partie comprend l'autre jupe latérale 4b ainsi que la paroi périphérique extérieure 4c. Selon la conception retenue, il devra être assuré un parallélisme précis entre les surfaces intérieures du boîtier.

Un traitement de surface, éventuellement similaire à celui appliqué sur le palier 3a, peut être réalisé sur les faces internes des jupes 4a, 4b du boîtier afin de favoriser le glissement radial du palier 3a.

Afin d'ajouter une raideur au mouvement radial du palier 3a dans le boîtier 4, un ressort métallique à lame 5 peut être positionné entre la paroi 4c du boîtier 4 et la bague 3b du fourreau annulaire 3 de sorte à créer une force radiale dirigée vers l'intérieur s'exerçant sur la surface extérieure de la bague 3b et à maintenir le contact entre la bague 3b et le palier 3a et entre le palier 3a et la rotule 2. Ce ressort métallique est préférentiellement formé dans un matériau à haute limite élastique, voire hyperélastique, afin de rester le plus longtemps possible dans le domaine élastique. Par hyperélastique, on entend un matériau ne présentant pas de domaine plastique avant la rupture. Le ressort à lame 5 peut comprendre une ou plusieurs lames positionnées radialement les unes contre les autres. Dans l'exemple illustré, le ressort 5 est constitué de deux anneaux élastiques ondulés 5a, 5b. Outre le fait qu'il permet d'opposer une résistance au déplacement radial par frottement, le ressort métallique 5 crée un amortissement limitant les risques d'amplification des phénomènes vibratoires.

Dans l'exemple illustré, la bague 3b est munie d'une nervure périphérique 6 permettant de centrer les deux anneaux 5a, 5b du ressort métallique 5 et présentant l'avantage supplémentaire de renforcer structurellement la bague en limitant sa flexion.

La figure 2 montre une vue en perspective du raccord de jonction et de la conduite 1. On peut voir la plaque bombée formant rotule 2, coopérant avec le fourreau annulaire 3, l'ensemble formant une liaison linéaire annulaire qui confère une liberté de mouvement axiale, radiale et angulaire. Selon les flèches F₁, F₂ et F₃ de la figure 1 on voit également le boîtier 4 conférant la liberté de mouvement radiale. En d'autres termes, la conduite 1 est maintenue en place par le boîtier 4 lui-même inséré dans une cloison non représentée. La conduite 1 dispose alors d'une liberté de mouvement axiale, angulaire et radiale. De par sa conception, le raccord de jonction permet de maintenir une étanchéité entre les deux côtés de la cloison dans laquelle le joint est installé.

Le raccord de jonction est fabriqué en formant une rotule annulaire 2 par déformation localisée de deux tubes concentriques ajustés. Pour cela, on emmanche deux tubes concentriques, dont le diamètre extérieur de l'un correspond sensiblement au diamètre intérieur de l'autre. Les tubes sont ensuite jointés et mis en forme de rotule. Différents procédés peuvent ensuite être employés afin de former la partie convexe de la rotule. Par exemple, on peut utiliser un procédé de déformation mécanique en déformant localement les tubes par déplacement d'un mandrin. On peut également utiliser un élastomère disposé dans le tube interne et soumis à une déformation longitudinale. L'élastomère contraint par les tubes et comprimé selon l'axe du tube provoque une déformation perpendiculaire à l'axe du tube. Enfin, de façon similaire, un procédé hydraulique peut être employé, en remplaçant l'élastomère par un fluide incompressible.

La rotule 2 ainsi obtenue est soudée par une de ses extrémités axiales sur la conduite 1. Le fourreau 3 est assemblé avec la rotule 2 par emmanchement avec un effort manuel, de préférence inférieur à 320 N, puis un boîtier 4 est assemblé autour du fourreau 3.

L'ajustement glissant permettant l'assemblage du fourreau annulaire 3 avec la plaque bombée formant rotule 2 est rendu possible par un emmanchement manuel, légèrement en force. L'effort doit rester inférieur à la norme d'effort manuel de l'industrie aéronautique soit environ 320N. L'emmanchement est également favorisé par les caractéristiques de la plaque extérieure 2b, notamment grâce à son élasticité. Il est à noter que la qualité de la liaison linéaire annulaire dépend de l'ajustement initial. La plaque bombée formant rotule, soudée sur une seule de ses extrémités, peut être légèrement comprimée radialement pour être assemblée en force. La compression radiale entraîne un léger déplacement axial de la partie de la plaque bombée formant rotule 2 en contact libre avec la conduite 1. Dans tous les cas, l'effort de montage, qui est aussi la raideur axiale de la liaison linéaire annulaire doit, de préférence, rester inférieur à 320N. Au montage, le jeu radial entre la plaque bombée formant rotule 2 et le palier 3a doit être de préférence nul pour éviter les risques de détérioration de la plaque bombée formant rotule 2 sous des sollicitations vibratoires. Après usure du palier, le jeu radial, noté J sur la figure 3, est compensé par la flexibilité de la plaque extérieure 2b. Celle-ci agit comme un ressort à lame amortissant les vibrations radiales tout en assurant l'étanchéité entre les zones B et C. La rotule 2 demeure ainsi au contact du palier 3a.

Le boîtier 4 est assemblé en solidarisant les parties 4a et 4b, 4c par une liaison, démontable ou non démontable.

Afin d'améliorer les propriétés de résistance et frottement, on peut réaliser un dépôt d'un revêtement améliorant les propriétés de résistance à l'usure et de coefficient de frottement sur le palier 3a disposé dans le fourreau 3 et sur au moins les surfaces internes du boîtier 4.

## Revendications

1. Raccord de jonction entre une conduite pour fluide et un support annulaire, le raccord comprenant la conduite, le support annulaire et une plaque bombée formant rotule (2) fixée autour de la conduite (1), la rotule (2) étant par ailleurs en contact avec un fourreau annulaire (3), contenu dans un boîtier (4) du support annulaire, la rotule (2) comprenant une plaque intérieure (2a) et une plaque extérieure (2b), la plaque intérieure (2a) étant soudée par une de ses extrémités sur la conduite (1), l'autre extrémité étant en appui simple sur la conduite (1) avec ou sans jeu périphérique, la plaque extérieure (2b) recouvrant partiellement la plaque intérieure (2a).

2. Raccord selon la revendication 1, dans lequel la plaque intérieure (2a) présente une épaisseur plus importante que celle de la plaque extérieure (2b).

3. Raccord selon la revendication 1 ou 2, dans lequel la plaque extérieure (2b) est constituée d'un matériau de plus grande dureté de surface et de plus grande limite élastique par rapport aux propriétés correspondantes de la plaque intérieure (2a).

4. Raccord selon l'une quelconque des revendications 1 à 3, dans lequel le fourreau (3) comprend un palier annulaire (3a) en contact par son alésage interne avec la surface extérieure de la rotule (2) et une bague (3b) montée autour du palier (3a).

5. Raccord selon la revendication 4, dans lequel le palier (3a) est revêtu d'un revêtement améliorant les propriétés de résistance à l'usure et de coefficient de frottement.

6. Raccord selon la revendication 5, dans lequel le revêtement comprend des nanomatériaux ou du graphite.

7. Raccord selon l'une quelconque des revendications 3 à 6, dans lequel les deux flans radiaux du palier (3b) sont en contact de frottement avec deux jupes latérales du boîtier.

8. Raccord selon la revendication 7, dans lequel le boîtier (4) comprend deux parties, l'une des jupes latérales étant fixée sur une partie du boîtier, l'autre jupe étant fixée sur l'autre partie.

9. Raccord selon l'une quelconque des revendications 4 à 8, dans lequel la dimension axiale de la bague (3b) est inférieure à celle du palier (3a).

10. Raccord selon l'une quelconque des revendications 4 à 9, dans lequel au moins un ressort à lame (5) est monté entre la paroi périphérique interne du boîtier (4) et la bague (3b).

11. Raccord selon l'une quelconque des revendications 4 à 10, dans lequel la bague (3b) présente une nervure périphérique (6), deux ressorts (5) étant montés de part et d'autre de la nervure périphérique (6).

## Patentansprüche

1. Kopplung zwischen einer Leitung für Fluid und einer ringförmigen Stütze, wobei die Kopplung die Leitung, die ringförmige Stütze und eine kuppelförmige Platte umfasst, die ein um die Leitung (1) befestigtes Kugelgelenk (2) bildet, wobei das Kugelgelenk (2) ferner mit einer ringförmigen Gleithülse (3) in Kontakt ist, die in einem Gehäuse (4) der ringförmigen Stütze enthalten ist, wobei das Kugelgelenk (2) eine innere Platte (2a) und eine äußere Platte (2b) umfasst, wobei die innere Platte (2a) mit einem ihrer Enden an der Leitung (1) angeschweißt ist und das andere Ende sich einfach mit oder ohne Umfangsspiel auf der Leitung (1) abstützt, wobei die äußere Platte (2b) die innere Platte (2a) teilweise abdeckt.

2. Kopplung nach Anspruch 1, wobei die innere Platte (2a) eine größere Dicke als die äußere Platte (2b) aufweist.

3. Kopplung nach Anspruch 1 oder 2, wobei die äußere Platte (2b) aus einem Material besteht, das bezüglich der entsprechenden Eigenschaften der inneren Platte (2a) eine größere Oberflächenhärte und eine höhere Elastizitätsgrenze hat.

4. Kopplung nach einem der Ansprüche 1 bis 3, wobei die Gleithülse (3) ein ringförmiges Lager (3a), das durch seine innere Bohrung mit der äußeren Fläche des Kugelgelenks (2) in Kontakt ist, und einen um das Lager (3a) montierten Ring (3b) umfasst.

5. Kopplung nach Anspruch 4, wobei das Lager (3a) mit einer Beschichtung beschichtet ist, die die Verschleißfestigkeits- und Reibungskoeffizienteigenschaften verbessert.

6. Kopplung nach Anspruch 5, wobei die Beschichtung Nanomaterialien oder Graphit umfasst.

7. Kopplung nach einem der Ansprüche 3 bis 6, wobei die beiden radialen Seiten des Lagers (3b) in Reibkontakt mit zwei seitlichen Schurzen des Gehäuses steht.

8. Kopplung nach Anspruch 7, wobei das Gehäuse (4) zwei Teile umfasst, wobei einer der seitlichen Schurze an einem Teil des Gehäuses befestigt ist und der andere Schurz an dem anderen Teil befestigt ist.

9. Kopplung nach einem der Ansprüche 4 bis 8, wobei die axiale Abmessung des Rings (3b) kleiner als die des Lagers (3a) ist.

10. Kopplung nach einem der Ansprüche 4 bis 9, wobei mindestens eine Blattfeder (5) zwischen der inneren Umfangswand des Gehäuses (4) und dem Ring (3b) montiert ist.

11. Kopplung nach einem der Ansprüche 4 bis 10, wobei der Ring (3b) eine Umfangsrippe (6) aufweist, wobei zwei Federn (5) beiderseits der Umfangsrippe (6) montiert sind.

## Claims

1. Coupling connecting a fluid pipe and an annular support, the coupling comprising the pipe, the annular support, and a domed plate forming a ball swivel (2) fixed around the pipe (1), the ball swivel (2) moreover being in contact with an annular sleeve (3), contained in a housing (4) of the annular support, the ball swivel (2) comprising an inner plate (2a) and an outer plate (2b), the inner plate (2a) being welded by one of its ends to the pipe (1), the other end simply resting against the pipe (1), with or without peripheral clearance, the outer plate (2b) partially overlapping the inner plate (2a).

2. Coupling according to Claim 1, in which the inner plate (2a) has a thickness greater than that of the outer plate (2b).

3. Coupling according to Claim 1 or 2, in which the outer plate (2b) is made of a material with greater surface hardness and higher elastic limit compared with the corresponding properties of the inner plate (2a) .

4. Coupling according to any one of Claims 1 to 3, in which the sleeve (3) comprises an annular bearing (3a) in contact via its internal bore with the outer surface of the ball swivel (2) and a ring (3b) mounted around the bearing (3a).

5. Coupling according to Claim 4, in which the bearing (3a) is coated with a coating that improves the resistance to wear and coefficient of friction properties.

6. Coupling according to Claim 5, in which the coating contains nanomaterials or graphite.

7. Coupling according to any one of Claims 3 to 6, in which the two radial sides of the bearing (3b) are in friction contact with two lateral skirts of the housing.

8. Coupling according to Claim 7, in which the housing (4) comprises two parts, one of the lateral skirts being fixed to one part of the housing, the other skirt being fixed to the other part.

9. Coupling according to any one of Claims 4 to 8, in which the axial dimension of the ring (3b) is smaller than that of the bearing (3a).

10. Coupling according to any one of Claims 4 to 9, in which at least one leaf spring (5) is mounted between the internal peripheral wall of the housing (4) and the ring (3b).

11. Coupling according to any one of Claims 4 to 10, in which the ring (3b) has a peripheral rib (6), two springs (5) being mounted one on each side of the peripheral rib (6).
